# FASCICULE DE BREVET EUROPEEN

(11) **EP 3 003 792 B1**
(45) Date de publication et mention de la délivrance du brevet: **01.03.2017**
(21) Numéro de dépôt: 14725235.7
(22) Date de dépôt: 22.04.2014
(51) Int. Cl.: B60R 21/205, B62D 25/14, B60R 7/06

(54) **TRAVERSE POUR PLANCHE DE BORD COMPRENANT UN ETRIER DE FIXATION D'AIRBAG PASSAGER DÉGAGEANT UN ESPACE DE RANGEMENT**
ARMATURENBRETTQUERTRÄGER MIT EINER HALTEKLAMMER ZUR BEFESTIGUNG EINES BEIFAHRERAIRBAGS MIT BEREITSTELLUNG VON ABLAGERAUM
DASHBOARD CROSSMEMBER COMPRISING A BRACKET FOR FIXING A PASSENGER AIRBAG PROVIDING A STORAGE SPACE

(30) Priorité: 28.05.2013 FR 1354790
(43) Date de publication de la demande: 13.04.2016
(73) Titulaire: Peugeot Citroën Automobiles SA, 78140 Vélizy Villacoublay (FR)
(72) Inventeur: LACOSTE, Arnaud, F-91400 Orsay (FR)
(74) Mandataire: Fosse, Danièle
(86) Numéro de dépôt international: PCT/FR2014/050961
(87) Numéro de publication internationale: WO 2014/191643

(56) Documents cités:
- DE-A1- 10 240 395
- FR-A1- 2 961 770
- US-A- 5 209 519

## Description

La présente invention concerne le domaine général des infrastructures, du genre traverses, qui sont destinées à soutenir les planches de bord des véhicules automobiles.

DE 102 40 395 A1 divulgue une infrastructure de planche de bord pour véhicule selon le préambule de la revendication 1.

Généralement, de telles traverses comprennent une barre transversale, de type barre anti-rapprochement, qui est fixée aux montants latéraux de la carrosserie ainsi qu'au tablier séparant l'habitacle du compartiment moteur.

Ladite barre transversale présente une pluralité de supports de fixation qui lui permettent de soutenir la colonne de direction, les instruments, les conduits de ventilation, la console centrale, les panneaux d'habillage de la planche de bord, et, le cas échéant, un boîtier de sécurité (boîtier d'Airbag®) contenant un coussin gonflable de protection, de type Airbag®, placé en vis-à-vis du siège passager pour protéger ce dernier d'un choc frontal en cas de collision.

Or, si la présence d'un coussin gonflable de protection passager constitue un indéniable progrès en matière de sécurité, elle a toutefois pour principal inconvénient, en raison de l'encombrement du boîtier de sécurité, de priver la planche de bord d'un important volume utile, qui était jusqu'alors réservé au confort du passager.

En pratique, sur les véhicules équipés d'un coussin gonflable de protection passager frontal, on observe ainsi une réduction significative du volume libre de l'habitacle et/ou du volume du vide-poches, voire une suppression pure et simple dudit vide-poches, ce qui est bien entendu source d'un certain inconfort pour le passager.

Les objets assignés à l'invention visent par conséquent à remédier à ces inconvénients et à proposer un nouvel agencement de véhicule, et plus particulièrement une nouvelle infrastructure de planche de bord, qui, tout en préservant la sécurité des occupants du véhicule, améliore leur confort de vie à bord en leur procurant un maximum d'espace utile de rangement.

Les objets assignés à l'invention sont atteints au moyen d'une infrastructure de planche de bord pour véhicule, ladite infrastructure comprenant une barre, qui est pourvue d'au moins une bride de fixation conçue pour fixer ladite barre à la carrosserie du véhicule, un boîtier de sécurité (boitier d'Airbag®), destiné à contenir un coussin gonflable de protection contre les chocs (de type Airbag®), ainsi qu'une interface d'accouplement assurant l'arrimage du boîtier de sécurité à la barre, ladite infrastructure étant caractérisée en ce que l'interface d'accouplement comprend un étrier pourvu d'au moins un tronçon porteur recevant le boîtier de sécurité, et d'au moins un pied qui prend appui sur la barre et maintient le tronçon porteur à distance de ladite barre de sorte à dégager, entre le boîtier de sécurité et la barre, un espace de rangement qui est occupé par un vide-poches.

Avantageusement, en déportant, et plus particulièrement en surélevant, le boîtier de sécurité (boitier d'Airbag®) grâce à l'étrier conforme à l'invention, on peut ménager, entre la barre (typiquement la barre transversale de la traverse de planche de bord) et le tronçon porteur dudit étrier, un volume libre significatif, qui n'est pas entravé par la structure porteuse de la planche de bord, et qui permet ainsi d'insérer, entre ledit boîtier de sécurité et la barre, un vide-poches de contenance non négligeable qui, tout en étant accessible depuis l'habitacle, pénètre en profondeur dans la planche de bord, vers le tablier du véhicule, à travers le cadre délimité par l'étrier, en offrant ainsi une importante capacité de rangement supplémentaire.

Bien entendu, une telle infrastructure garantit la sécurité des occupants du véhicule, dans la mesure où l'agencement proposé ne contrarie nullement l'installation du boîtier de sécurité dans une position adaptée, ni le déploiement du coussin gonflable de protection en cas de choc.

L'invention permet donc de concilier efficacement sécurité et confort des occupants du véhicule, et plus particulièrement du passager avant, de surcroît sans augmenter significativement l'encombrement ni le poids de la planche de bord, ce qui préserve tant l'habitabilité que les performances du véhicule.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
Les figures 1 et 2 illustrent, selon des vues isolées en perspective, respectivement de face (depuis l'habitacle) et de dos (depuis le compartiment moteur), une variante de réalisation d'étrier pouvant être mis en oeuvre au sein d'une infrastructure de planche de bord conforme à l'invention.
La figure 3 illustre, selon une vue de détail en perspective depuis l'avant du véhicule (et par conséquent depuis le dos, caché, de la planche de bord), l'agencement d'une infrastructure de planche de bord conforme à l'invention, utilisant l'étrier des figures 1 et 2.
La figure 4 illustre, selon une vue de côté, l'infrastructure de la figure 3, en faisant apparaître la profondeur de l'espace de rangement dégagé par l'étrier.
La figure 5 illustre, selon une vue d'ensemble de côté (depuis le côté droit du véhicule), l'implantation de l'infrastructure des figures 3 et 4 au sein d'un véhicule automobile.

La présente invention concerne une infrastructure 1 de planche de bord pour véhicule, ladite infrastructure 1 comprenant une barre 2, qui est pourvue d'au moins une bride de fixation 3, 4 conçue pour fixer ladite barre à la carrosserie du véhicule, un boîtier de sécurité 5 (boîtier d'Airbag®), destiné à contenir un coussin gonflable de protection contre les chocs, de type Airbag®, ainsi qu'une interface d'accouplement 6 assurant l'arrimage du boîtier de sécurité 5 à la barre 2.

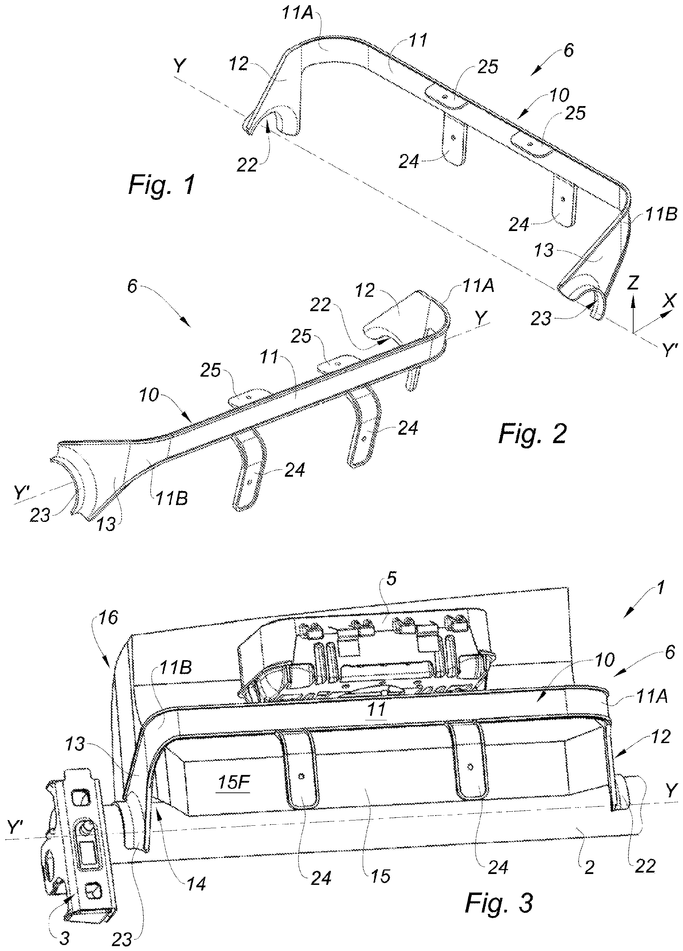

De préférence, tel que cela est illustré sur les figures 3 à 5, la barre 2 forme une traverse (de planche de bord) qui est destinée à être implantée sensiblement à l'horizontale, transversalement à la direction de marche X (arrière-avant sur les figures) du véhicule, et qui comprend à cet effet au moins une bride de fixation gauche (non représentée), conçue pour venir se fixer contre un montant gauche de la carrosserie du véhicule et une bride de fixation droite 3 conçue pour venir se fixer contre un montant droit de ladite carrosserie.

La barre 2 prendra de préférence la forme d'un tube, par exemple de section circulaire, qui s'étend selon un axe directeur (YY') sensiblement horizontal correspondant à la direction latérale transverse gauche-droite du véhicule.

Ladite barre 2 pourra avantageusement former également une traverse anti-rapprochement, contribuant à préserver l'intégrité de l'habitacle en cas de choc latéral.

La barre 2 pourra notamment être réalisée dans un matériau métallique, de type acier ou alliage d'aluminium, ou dans un matériau composite à matrice polymère renforcée par des fibres.

Par simple convention et par commodité de description, on notera Z la direction verticale, qui forme avec la direction de marche X et la direction transverse (YY') un trièdre direct, et l'on considérera que l'infrastructure 1 est située à l'avant du véhicule, entre l'habitacle et le compartiment moteur, pour soutenir une planche de bord avant (ou « frontale »).

De préférence, la barre 2 comprendra une bride de fixation dorsale 4, du genre fourche, destinée à venir se fixer sur le tablier qui sépare l'habitacle du compartiment moteur.

La barre 2 sera de préférence pourvue par ailleurs d'un support de colonne direction (non représenté) permettant de soutenir la colonne de direction. Elle pourra en outre comporter une jambe de force venant prendre appui sur le plancher du véhicule, ainsi que tout autre support utile par exemple à la fixation des canaux de ventilation, ou encore des instruments et/ou des panneaux d'habillage (façades) 7 de la planche de bord.

Bien entendu, l'invention concerne également en tant que tel un véhicule automobile, tel qu'un véhicule terrestre à roues motrices, qui est équipé d'une infrastructure 1 de planche de bord selon l'invention.

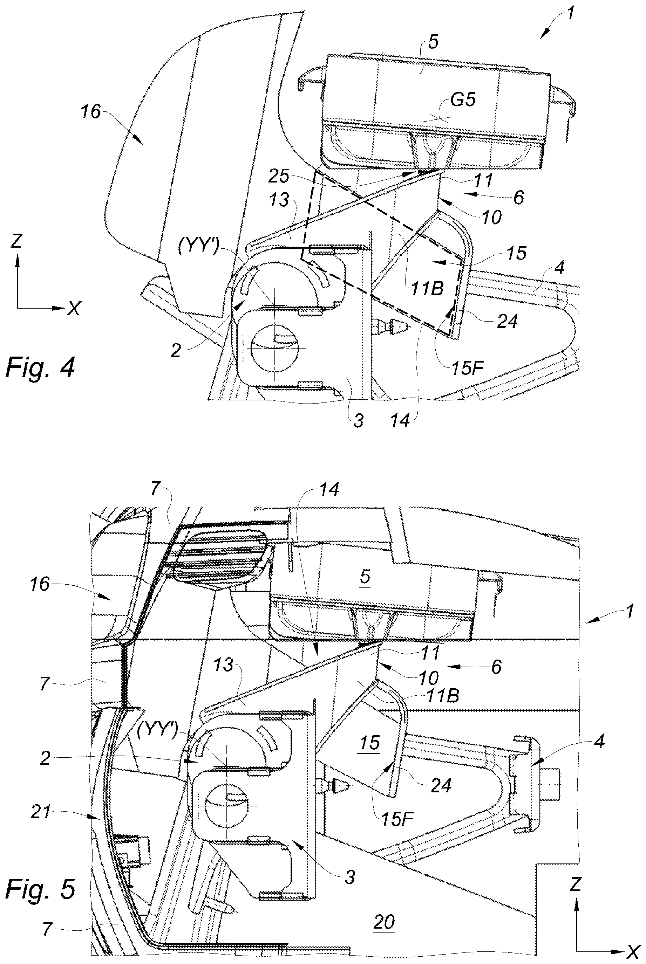

Selon l'invention, l'interface d'accouplement 6 comprend un étrier 10 qui est pourvu d'au moins un tronçon porteur 11 recevant le boîtier de sécurité 5, et d'au moins un pied 12, 13 qui prend appui sur la barre 2 et maintient le tronçon porteur 11 à distance de ladite barre 2 de sorte à dégager, entre le boîtier de sécurité 5 et la barre 2, un espace de rangement 14 (représenté en pointillés sur la figure 4) qui est occupé par un vide-poches 15.

Avantageusement, l'étrier 10 conforme à l'invention permet de déporter le boîtier de sécurité 5 à distance de la barre 2, de sorte à préserver un espace de rangement 14 creux, que ledit étrier 10 contourne, et dans lequel vient s'insérer, au moins en partie, le vide-poches 15 qui s'ouvre sur l'habitacle par une baie 16 éventuellement pourvue d'un couvercle.

L'agencement propre à l'invention permet donc avantageusement, tel que cela est bien visible sur les figures 3 à 5, de glisser un vide-poches 15 entre la barre 2 et le boîtier de sécurité 5, le fond 15F dudit vide-poches 15 pénétrant en profondeur dans la planche de bord, en direction du tablier (ici dans le sens allant vers l'avant selon la direction de marche X), en passant à travers la fenêtre ouverte (tunnel) que délimitent ensemble l'étrier 10 et la barre 2, et en allant jusqu'à dépasser la barre 2 elle-même.

Géométriquement, le vide-poches 15 pourra ainsi par exemple franchir le plan de jauge fictif qui contient l'axe directeur (YY') de la barre 2 et qui passe par le centre de gravité G5 du boîtier de sécurité 5.

Le vide-poches 15 pourra bien entendu être formé par tout caisson ou container creux, de préférence rigide, apte à recevoir un chargement d'objets quelconques. Il pourra par exemple être réalisé dans un matériau polymère thermoplastique, éventuellement renforcé de fibres.

La contenance utile du vide-poches 15, et le cas échéant la contenance utile de la partie dudit vide-poches 15 qui est insérée entre la barre 2 et l'étrier 10 pour occuper le volume de rangement 14 dégagé, sera de préférence supérieure ou égale à 1 (un) litre, supérieure ou égale à 2 (deux) litres, et par exemple sensiblement égale, voire supérieure, à 4 (quatre) litres.

De préférence, la profondeur (ici sensiblement en X) et la hauteur (ici sensiblement en Z) dégagées par le passage compris entre la barre 2 et le tronçon porteur 11 seront suffisantes pour permettre d'agencer la contenance du vide-poches 15, par exemple d'une valeur totale de 4 litres, de manière à ce que ledit vide-poches 15 puisse accueillir (intégralement) des objets du quotidien relativement encombrants, et, plus particulièrement, par exemple, des dossiers de format A4 (format nu des feuillets de 21 cm x 29,7 cm, voire format de pochette rigide ou de classeur de 24 cm x 32 cm), ou bien encore un ordinateur portable (assimilable à un parallélépipède de l'ordre de 35 cm à 45 cm de largeur x 30 à 35 cm de profondeur x 3 cm à 5 cm d'épaisseur), ou deux tablettes tactiles superposées.

A cet effet, la profondeur utile du vide-poches 15, mesurée depuis la baie 16 d'accès au vide-poches 15 jusqu'au fond 15F de ce dernier sera de préférence supérieure ou égale à 21 cm, supérieure ou égale à 24 cm, voire supérieure ou égale à 30 cm.

La hauteur minimale utile dudit vide-poches 15, notamment dans l'espace de rangement 14 dégagé entre la barre 2 et le tronçon porteur 11, sera de préférence supérieure ou égale à 5 cm, voire à 6 cm.

De préférence, le véhicule comprenant au moins une première place réservée au conducteur du véhicule et au moins une seconde place, de préférence une place avant, réservée à un passager, l'étrier 10, le boîtier de sécurité 5, et le vide-poches 15 seront situés au niveau de la place du passager, préférentiellement selon une disposition frontale faisant face au siège passager.

Selon un agencement préférentiel de l'invention, l'étrier 10 fait saillie au-dessus de la barre 2 de sorte à dégager un espace de rangement 14 pour un vide-poches 15 supérieur, engagé au-dessus de la barre 2 et en-dessous à la fois du tronçon porteur 11 de l'étrier et du boîtier de sécurité 5 porté par ledit étrier 10.

En d'autres termes, l'agencement propre à l'invention permet avantageusement de concilier la présence d'un airbag® frontal et d'un vide-poches 15 supérieur frontal, qui cohabitent tous deux dans la moitié, voire le tiers ou le quart supérieur de la planche de bord, au-dessus de la barre 2.

Selon une variante de réalisation particulièrement préférentielle, l'infrastructure 1 comprend, de préférence du côté passager, un premier vide-poches 15 qui occupe l'espace de rangement 14 dégagé entre la barre 2 et le boîtier de sécurité 5 porté par le tronçon porteur 11 de l'étrier 10, ainsi qu'un second vide-poches 20 qui est disposé en vis-à-vis du premier vide-poches 15, de l'autre côté de la barre 2, à l'opposé du côté ou se trouvent le tronçon porteur 11 et le boîtier de sécurité 5, tel que cela est illustré sur la figure 5.

De même que le premier vide-poches 15, le second vide-poches 20 s'ouvre sur l'habitacle, par une seconde baie 21, et pourra être formé par tout caisson creux approprié, par exemple en matière plastique éventuellement renforcée de fibres, et être pourvu ou non d'un couvercle rabattable.

De préférence, le premier et le second vide-poches 15, 20 seront formés par des caissons séparés, ne faisant pas communiquer leurs volumes internes respectifs.

En disposant ainsi deux vide-poches 15, 20, de chaque côté de la barre 2, et plus particulièrement de part et d'autre de l'axe directeur (YY'), on accroît significativement le volume utile de rangement offert aux occupants du véhicule.

De façon particulièrement préférentielle, le premier vide-poches 15 pourra former un vide-poches supérieur, situé au-dessus de la barre 2, tandis que le second vide-poches 20 formera un vide-poches inférieur, situé (et accroché) sous la barre 2, plus près du plancher, et sensiblement à l'aplomb du premier vide-poches 15. On obtiendra ainsi une importante capacité de rangement totale, sous forme d'une sorte d'étagère.

De préférence, la contenance du second vide-poches inférieur 20 sera strictement supérieure à la contenance du premier vide-poches 15 supérieur.

De préférence, tel que cela est notamment illustré sur la figure 3, le tronçon porteur 11 de l'étrier 10 s'étend sensiblement parallèlement à la barre 2, entre un premier pied 12 et un second pied 13 distants l'un de l'autre et qui prennent chacun appui sur ladite barre 2.

En formant ainsi une sorte de portique bipède, auquel un premier pied (gauche) 12 et un second pied (droit) 13 fournissent deux appuis axialement distants le long de l'axe directeur (YY'), l'étrier 10 combine compacité, stabilité, et grande rigidité, notamment vis-à-vis de la flexion.

L'étrier 10 procure ainsi une excellente assise, robuste et stable, au boîtier de sécurité 5, tout en présentant un encombrement réduit, qui permet d'optimiser le volume libéré pour l'espace de rangement 14.

De préférence, le tronçon porteur 11 de l'étrier 10 et le ou les pieds 12, 13 dudit étrier sont formés d'un seul tenant.

On pourra ainsi obtenir par un procédé de fabrication simple et peu coûteux, tel que le moulage ou l'emboutissage, un étrier 10 présentant une structure à la fois simple et robuste.

Ceci étant, il reste bien entendu également envisageable de rapporter et fixer les pieds 12, 13 sur le tronçon porteur 11, par exemple selon un montage mécano-soudé.

Selon une configuration préférentielle, le premier pied 12 et le second pied 13 de l'étrier 10 sont reliés respectivement à une première extrémité coudée 11 A du tronçon porteur 11 et à une seconde extrémité coudée 11 B opposée dudit tronçon porteur 11 de sorte à former un arceau monolithique en U dont les branches forment chacune un pied 12, 13 prenant appui sur la barre 2 et dont la base forme le tronçon porteur 11 recevant le boîtier de sécurité 5.

Avantageusement, les coudes ainsi formés aux première et seconde extrémités 11 A, 11B permettent de rabattre chaque pied 12, 13 correspondant vers la barre 2, tout en ménageant entre lesdits pieds 12, 13, l'espace de rangement 14, et en conférant à l'étrier 10 une forme arquée, convexe, douce et compacte, qui peut notamment être obtenue aisément par emboutissage.

Une telle configuration en arceau permet en outre de bénéficier de deux pieds 12, 13 d'appui distants, situés de part et d'autre du vide-poche 15 le long de l'axe directeur (YY'), et donc d'une bonne stabilité de l'étrier 10 sur la barre 2, tout en offrant un tronçon porteur 11 étendu, qui relie les pieds 12, 13 à la manière d'un pont enjambant le vide-poche 15, et qui procure ainsi une assise large et stable au boîtier de sécurité 5, permettant le cas échéant de prévoir plusieurs points d'attache dudit boîtier de sécurité 5.

Entre les deux coudes 11 A, 11B qui marquent ses limites, le tronçon porteur 11 est quant à lui de préférence sensiblement rectiligne.

Ledit tronçon porteur 11 pourra avantageusement être formé par une bande, de préférence métallique, qui s'étend en épaisseur sensiblement selon la direction longitudinale X, et en largeur (supérieure à l'épaisseur) sensiblement selon la direction verticale Z.

De préférence, tel que cela est bien visible sur les figures 1 et 2, le ou les pieds de l'étrier 12, 13 sont formés par des berceaux 22, 23 de formes conjuguées à celles des sections transverses de la barre 2 que lesdits pieds épousent.

A ce titre, les berceaux 22, 23 pourront notamment prendre une forme circulaire, concentriques à la barre 2, et plus particulièrement la forme d'un croissant.

La forme concave desdits berceaux offrira avantageusement une surface d'appui étendue, qui contribue à la bonne fixation et à la stabilité de l'étrier 10, et par conséquent du boîtier de sécurité 5.

Lesdits berceaux 22, 23 pourront en outre, tel que cela est illustré sur les figures 1 à 3, comporter des collets rabattus (axialement, le long de la barre 2) qui permettent d'accroître encore leur surface d'appui.

L'assemblage des pieds 12, 13, et plus particulièrement des berceaux 22, 23, sur la barre 2 pourra par exemple être réalisé par soudage.

Par ailleurs, le tronçon porteur 11 de l'étrier 10 est préférentiellement pourvu d'une ou plusieurs pattes de retenue 24, de préférence venues de matière avec ledit tronçon porteur 11, qui font saillie en direction de la barre 2 de sorte à former des butées contre lesquelles le fond 15F du vide-poches 15 vient en appui, tel que cela est notamment visible sur les figures 3 et 4.

En barrant le fond de l'espace de rangement 14 et en offrant une surface d'appui voire de fixation supplémentaire au vide-poches 15, les pattes de retenue 24 facilite l'insertion, le placement reproductible, puis le maintien solide et stable dudit vide-poche 15 au sein dudit espace de rangement 14.

En définitive, l'espace rangement 14 gagné par l'invention s'étendra ainsi de préférence transversalement (selon l'axe (YY'), le long de la barre 2) depuis le premier pied 12 jusqu'au second pied 13, et longitudinalement (selon la direction de marche X), depuis la face avant de la barre 2, orientée vers l'habitacle, jusqu'aux butées formées par les pattes de retenue 24.

Selon une variante de réalisation préférentielle, la ou les pattes de retenue 24, de préférence au nombre de deux, sont formées par des languettes coudées sensiblement en équerre, qui naissent sur chant inférieur du tronçon porteur 11.

Lesdites pattes de retenue 24 présenteront de préférence chacune à l'encontre du fond 15F du vide-poches une surface d'appui plane, normale à leur épaisseur.

De préférence, le boîtier de sécurité 5 et le tronçon porteur 11 étant situé au-dessus de la barre 2, les pattes de retenue 24 pointeront vers le bas.

De préférence, les pieds 12, 13 s'étendront à la fois selon une composante verticale (en Z), ici ascendante, et selon une composante longitudinale (en X), ici vers l'avant, en s'éloignant de l'habitacle (à partir de leurs berceaux 22, 23 d'attache sur la barre 2), de manière à déporter le tronçon porteur 11, et donc le boîtier de sécurité 5, à la fois vers le haut et vers l'avant.

Les pattes de retenue 24 pourront quant à elles s'étendre également d'une part selon une composante longitudinale (en X), de sorte à prolonger (à partir du tronçon porteur 11) la pénétration de l'interface d'accouplement 6 vers l'avant, au-delà du tronçon porteur 11 et de l'attache du boîtier de sécurité 5, et ainsi offrir un plus grand volume à l'espace de rangement 14, et d'autre part selon une composante verticale (en Z) descendante, opposée à celle des pieds 12, 13, de manière à rabattre lesdites pattes 24 vers la barre 2 pour marquer la limite dudit espace de rangement 14 en profondeur.

Par ailleurs, tel que cela est notamment visible sur les figures 1 et 2, le tronçon porteur 11 comportera également une ou des platines 25 procurant un ou, de préférence, plusieurs points d'attache (axialement distants le long de la barre 2) au boîtier de sécurité 5.

Lesdites platines pourront par exemple être formées par des languettes fixées (ou venues de matière) perpendiculairement au tronçon porteur 11, de préférence en saillie vers l'habitacle.

Le boîtier de sécurité 5 pourra de préférence être vissé auxdites platines 25.

Selon une variante de réalisation préférentielle, l'étrier 10 est intégralement formé d'un seul tenant dans un matériau métallique.

Plus particulièrement, l'ensemble comprenant les pieds 12, 13, les berceaux 22, 23, le tronçon porteur 11, les pattes de retenue 24 et les platines 25 pourra former un corps monolithique, qui pourra par exemple être obtenu par découpage puis pliage ou emboutissage d'une feuille métallique (tôle).

Avantageusement, l'utilisation d'un matériau métallique permet une mise en forme facile, et confère à l'étrier 10 une bonne robustesse, ainsi que, le cas échéant, une capacité de déformation programmée pouvant contribuer à dissiper l'énergie d'un choc en préservant l'habitacle.

L'invention peut également concerner en tant que tel un étrier 10 selon l'une ou l'autre des variantes proposées, qui est destiné à la fixation d'un boîtier de sécurité 5 sur une traverse de planche de bord.

## Revendications

1. Infrastructure (1) de planche de bord pour véhicule, ladite infrastructure (1) comprenant une barre (2), qui est pourvue d'au moins une bride de fixation (3, 4) conçue pour fixer ladite barre (2) à la carrosserie du véhicule, un boîtier de sécurité (5), destiné à contenir un coussin gonflable de protection contre les chocs, ainsi qu'une interface d'accouplement (6) assurant l'arrimage du boîtier de sécurité (5) à la barre (2), ladite infrastructure (1) étant **caractérisée en ce que** l'interface d'accouplement (6) comprend un étrier (10) pourvu d'au moins un tronçon porteur (11) recevant le boîtier de sécurité (5), et d'au moins un pied (12, 13) qui prend appui sur la barre (2) et maintient le tronçon porteur (11) à distance de ladite barre (2) de sorte à dégager, entre le boîtier de sécurité (5) et la barre (2), un espace de rangement (14) qui est occupé par un vide-poches (15).

2. Infrastructure selon la revendication 1 **caractérisée en ce que** le tronçon porteur (11) de l'étrier (10) s'étend sensiblement parallèlement à la barre (2), entre un premier pied (12) et un second pied (13) distants l'un de l'autre et qui prennent chacun appui sur ladite barre (2).

3. Infrastructure selon la revendication 1 ou 2 **caractérisée en ce que** le tronçon porteur (11) de l'étrier (10) et le ou les pieds (12, 13) dudit étrier sont formés d'un seul tenant.

4. Infrastructure selon les revendications 2 et 3 **caractérisée en ce que** le premier pied (12) et le second pied (13) de l'étrier (10) sont reliés respectivement à une première extrémité coudée (11 A) du tronçon porteur (11) et à une seconde extrémité coudée (11 B) opposée dudit tronçon porteur de sorte à former un arceau monolithique en U dont les branches forment chacune un pied (12, 13) prenant appui sur la barre (2) et dont la base forme le tronçon porteur (11) recevant le boîtier de sécurité (5).

5. Infrastructure selon l'une des revendications précédentes **caractérisée en ce que** le ou les pieds de l'étrier (12, 13) sont formés par des berceaux (22, 23) de formes conjuguées à celles des sections transverses de la barre (2) que lesdits pieds épousent.

6. Infrastructure selon l'une des revendications précédentes **caractérisée en ce que** le tronçon porteur (11) de l'étrier est pourvu d'une ou plusieurs pattes de retenue (24), de préférence venues de matière avec ledit tronçon porteur, qui font saillie en direction de la barre (2) de sorte à former des butées contre lesquelles le fond (15F) du vide-poches (15) vient en appui.

7. Infrastructure selon l'une des revendications précédentes **caractérisée en ce que** l'étrier (10) est intégralement formé d'un seul tenant dans un matériau métallique.

8. Infrastructure selon l'une des revendications précédentes **caractérisée en ce que** l'étrier (10) fait saillie au-dessus de la barre (2) de sorte à dégager un espace de rangement (14) pour un vide-poches (15) supérieur, engagé au-dessus de la barre (2) et en-dessous à la fois du tronçon porteur (11) de l'étrier et du boîtier de sécurité (5) porté par ledit étrier (10).

9. Infrastructure selon l'une des revendications précédentes **caractérisée en ce que** la barre (2) forme une traverse qui est destinée à être implantée sensiblement à l'horizontale, transversalement à la direction de marche (X) du véhicule, et qui comprend à cet effet au moins une bride de fixation gauche, conçue pour venir se fixer contre un montant gauche de la carrosserie du véhicule et une bride de fixation droite (3) conçue pour venir se fixer contre un montant droit de ladite carrosserie, et **en ce que** l'infrastructure comprend, de préférence du côté passager, un premier vide-poches (15) occupant l'espace de rangement (14) dégagé entre la barre (2) et le boîtier de sécurité (5) porté par le tronçon porteur (11) de l'étrier, ainsi qu'un second vide-poches (20) disposé en vis-à-vis du premier vide-poches (15), de l'autre côté de la barre (2), à l'opposé du côté ou se trouvent le tronçon porteur (11) et le boîtier de sécurité (5).

10. Véhicule automobile équipé d'une infrastructure (1) de planche de bord selon l'une quelconque des revendications précédentes.

## Patentansprüche

1. Armaturenbrettinfrastruktur (1) für Fahrzeug, wobei die Infrastruktur (1) eine Stange (2) umfasst, die mit mindestens einem Befestigungsflansch (3, 4) versehen ist, der ausgelegt ist, um die Stange (2) an der Karosserie des Fahrzeugs zu befestigen, ein Sicherheitsgehäuse (5), das dazu bestimmt ist, ein aufblasbares Stoßschutzkissen zu enthalten, sowie eine Kopplungsschnittfläche (6), die das Befestigen des Sicherheitsgehäuses (5) an der Stange (2) sicherstellt, Infrastruktur (1) **dadurch gekennzeichnet, dass** die Kopplungsschnittfläche (6) einen Bügel (10) umfasst, der mit mindestens einem Trageabschnitt (11) versehen ist, der das Sicherheitsgehäuse (5) erhält, und mit mindestens einem Fuß (12, 13), der sich auf die Stange (2) stützt und den Trageabschnitt (11) von der Stange (2) beabstandet derart hält, dass zwischen dem Sicherheitsgehäuse (5) und der Stange (2) ein Ablageraum (14) freigelegt wird, der von einem Ablagefach (15) belegt ist.

2. Infrastruktur nach Anspruch 1, **dadurch gekennzeichnet, dass** sich der Trageabschnitt (11) des Bügels (10) im Wesentlichen parallel zu der Stange (2) zwischen einem ersten Fuß (12) und einem zweiten Fuß (13), die voneinander beabstandet sind und sich jeweils auf die Stange (2) stützen, erstreckt.

3. Infrastruktur nach Anspruch 1 oder 2, **dadurch gekennzeichnet, dass** der Trageabschnitt (11) des Bügels (10) und der Fuß oder die Füße (12, 13) des Bügels aus einem Stück gebildet sind.

4. Infrastruktur nach den Ansprüchen 2 und 3, **dadurch gekennzeichnet, dass** der erste Fuß (12) und der zweite Fuß (13) des Bügels (10) jeweils mit einem ersten abgewinkelten Ende (11A) des Trageabschnitts (11) und mit einem entgegengesetzten zweiten abgewinkelten Ende (11B) des Trageabschnitts derart verbunden sind, dass ein einteiliger Bogen in U-Form gebildet wird, dessen Schenkel jeweils einen Fuß (12, 13) bilden, der sich auf die Stange (2) stützt, und dessen Basis den Trageabschnitt (11), der das Sicherheitsgehäuse (5) erhält, bildet.

5. Infrastruktur nach einem der vorhergehenden Ansprüche, **dadurch gekennzeichnet, dass** der oder die Füße (12, 13) des Bügels von Satteln (22, 23) mit Formen gebildet sind, die zu denjenigen der Querabschnitte der Stange (2), an die sich die Füße schmiegen, passen.

6. Infrastruktur nach einem der vorhergehenden Ansprüche, **dadurch gekennzeichnet, dass** der Trageabschnitt (11) des Bügels mit einer oder mehreren Haltepratzen (24) versehen ist, die bevorzugt aus einem Stück mit dem Trageabschnitt bestehen, die in Richtung der Stange (2) derart vorstehen, dass Anschläge gebildet werden, gegen welche der Boden (15F) des Ablagefachs (15) zum Aufliegen kommt.

7. Infrastruktur nach einem der vorhergehenden Ansprüche, **dadurch gekennzeichnet, dass** der Bügel (10) integral aus einem Stück aus einem Metallwerkstoff gebildet ist.

8. Infrastruktur nach einem der vorhergehenden Ansprüche, **dadurch gekennzeichnet, dass** der Bügel (10) oberhalb der Stange (2) derart vorsteht, dass ein Ablageraum (14) für ein oberes Ablagefach (15) freigelegt wird, das oberhalb der Stange (2) und unterhalb sowohl des Trageabschnitts (11) des Bügels als auch des Sicherheitsgehäuses (5), das von dem Bügel (10) getragen wird, eingreift.

9. Infrastruktur nach einem der vorhergehenden Ansprüche, **dadurch gekennzeichnet** das die Stange (2) einen Querträger bildet, der dazu bestimmt ist, im Wesentlichen horizontal eingerichtet zu sein, quer zu der Bewegungsrichtung (X) des Fahrzeugs, und die dazu mindestens einen linken Befestigungsflansch umfasst, der ausgelegt ist, um sich gegen einen linken Ständer der Karosserie des Fahrzeugs zu befestigen, und einen rechten Befestigungsflansch (3), der ausgelegt ist, um sich gegen einen rechten Ständer der Karosserie zu befestigen, und dass die Infrastruktur bevorzugt auf der Beifahrerseite ein erstes Ablagefach (15) umfasst, das den Ablageraum (14), der zwischen der Stange (2) und dem Sicherheitsgehäuses (5), das von dem Trageabschnitt (11) des Bügels getragen wird, freigelegt ist, sowie ein zweites Ablagefach (20), das in Gegenüberlage zu dem ersten Ablagefach (15) auf der anderen Seite der Stange (2), der Seite entgegengesetzt, auf der sich der Trageabschnitt (11) und das Sicherheitsgehäuses (5) befinden, angeordnet ist.

10. Kraftfahrzeug, das mit einer Armaturenbrettinfrastruktur (1) nach einem der vorhergehenden Ansprüche ausgestattet ist.

## Claims

1. An infrastructure (1) of a vehicle dashboard for a vehicle, said infrastructure (1) including a bar (2), which is provided with at least one fixing clamp (3, 4) designed to fix said bar (2) to the body of the vehicle, a safety housing (5), intended to contain an airbag for protection against impact, and a coupling interface (6) providing the securing of the safety housing (5) to the bar (2), said infrastructure (1) being **characterized in that** the coupling interface (6) includes a bracket (10) provided with at least one support section (11) receiving the safety housing (5), and with at least one foot (12, 13) which rests on the bar (2) and holds the support section (11) at a distance from said bar (2) so as to free, between the safety housing (5) and the bar (2), a storage space (14) which is occupied by a glove compartment (15).

2. The infrastructure according to Claim 1, **characterized in that** the support section (11) of the bracket (10) extends substantially parallel to the bar (2), between a first foot (12) and a second foot (13) remote from one another and which each rest on said bar (2).

3. The infrastructure according to Claim 1 or 2, **characterized in that** the support section (11) of the bracket (10) and the foot or feet (12, 13) of said bracket are formed in one piece.

4. The infrastructure according to Claims 2 and 3, **characterized in that** the first foot (12) and the second foot (13) of the bracket (10) are connected respectively to a first bent end (11A) of the support section (11) and a second bent end (11B) opposed to said support section so as to form a monolithic U-shaped arch, the branches of which each form a foot (12, 13) resting on the bar (2) and the base of which forms the support section (11) receiving the safety housing (5).

5. The infrastructure according to one of the preceding claims, **characterized in that** the foot or feet (12, 13) of the bracket are formed by cradles (22, 23) of shapes paired with those of the transverse sections of the bar (2) which said feet fit.

6. The infrastructure according to one of the preceding claims, **characterized in that** the support section (11) of the bracket is provided with one or several retaining lugs (24), preferably made in one piece with said support section, which project in the direction of the bar (2) so as to form stops against which the base (15F) of the glove compartment (15) comes to rest.

7. The infrastructure according to one of the preceding claims, **characterized in that** the bracket (10) is integrally formed in a single piece in a metallic material.

8. The infrastructure according to one of the preceding claims, **characterized in that** the bracket (10) projects above the bar (2) so as to free a storage space (14) for an upper glove compartment (15), engaged above the bar (2) and beneath both the support section (11) of the bracket and the safety housing (5) carried by said bracket (10).

9. The infrastructure according to one of the preceding claims, **characterized in that** the bar (2) forms a crossmember which is intended to be installed substantially horizontally, transversely to the direction of movement (X) of the vehicle, and which includes for this purpose at least one left-hand fixing clip, designed to come to be fixed against a left-hand pillar of the body of the vehicle, and a right-hand fixing clip (3) designed to come to be fixed against a right-hand pillar of said body, and **in that** the infrastructure includes, preferably on the passenger side, a first glove compartment (15) occupying the storage space (14) freed between the bar (2) and the safety housing (5) carried by the support section (11) of the bracket, and a second glove compartment (20) disposed facing the first glove compartment (15), on the other side of the bar (2), opposite the side in which the support section (11) and the safety housing (5) are situated.

10. A motor vehicle equipped with an infrastructure (1) of a dashboard according to any one of the preceding claims.
